# EUROPEAN PATENT SPECIFICATION

(11) **EP 2 538 398 B1**
(45) Date of publication and mention of the grant of the patent: **26.08.2015**
(21) Application number: 11461521.4
(22) Date of filing: 19.06.2011
(51) Int. Cl.: A61B 5/0484

(54) **System and method for transesophageal echocardiography simulations**
System und Verfahren für transösophageale Echokardiographie-Simulationen
Système et procédé pour simulations d'échocardiographie transoesophagienne

(43) Date of publication of application: 26.12.2012
(73) Proprietor: Centrum Transferu Technologii Medycznych Park Technologiczny Sp. z o.o., 31-202 Kraków (PL); Kempny, Aleksander, 41-940 Piekary Slaskie (PL); Piórkowski, Adam, 37-700 Przemysl (PL); Piatek, Pawel, 31-221 Kraków (PL); Gackowski, Andrzej, 31-347 Kraków (PL)
(72) Inventor: Kempny, Aleksander, 41-940 Piekary Slaskie (PL); Piórkowski, Adam, 37-700 Przemysl (PL); Piatek, Pawel, 31-221 Kraków (PL); Gackowski, Andrzej, 31-347 Kraków (PL)
(74) Representative: Pawlowski, Adam

(56) References cited:
- WO-A1-2009/106784
- WO-A1-2010/111090
- WO-A2-2008/071454
- WO-A2-2009/066285
- WO-A2-2009/117419
- WO-A2-2010/144663
- US-A1- 2007 081 709
- US-A1- 2011 123 077

## Description

The invention relates to echocardiography simulations and echocardiography simulators.

Echocardiography is one of the most useful diagnostic tools in cardiology. It provides information about heart anatomy and function. The two most widespread modes of echocardiographic imaging are transthoracic (TTE) and transesophageal (TEE) echocardiography.

TTE is a noninvasive technique without known complications. A trainee learning this technique can therefore conduct this examination many times in a single patient not causing risk or significant discomfort to the patient.

However, TEE has a semi-invasive nature and requires the insertion of a TEE probe, being a tube of approximately 10mm diameter into the esophagus. The examination can therefore be unpleasant for patients. The swallowing and manipulations of the probe are usually inconvenient for the patients. During the examination small injuries of the throat or oesophagus may appear, so it can potentially lead to infections and other complications during and after the examination. Very rare but serious complications may occur, including bleeding, teeth fracture, chocking, cardiac arrhythmias, hypoxemia and even oesophagus perforation.

TEE can't be performed or repeated solely for educational purposes and is therefore more difficult than TTE to learn. There is therefore a need for TEE simulators, enabling to learn this important examination without doing harm to the patients. The previously developed TEE simulators are manikin-based, expensive and their use is in consequence limited to only solitaire large medical centers.

TEE is a user-dependent imaging modality. Proper steering of the probe, spatial orientation and knowledge of potential pathologies play a pivotal role. Simulator training cannot replace traditional learning methods in the learning process, but can address the main obstacles in the learning process.

One of the main problems when learning TEE is the orientation in space. It can be challenging, even for echocardiographers having experience in TTE, to imagine a 3D heart model seen and then cut in 2D from the oesophagus, as in TEE. Experience in TTE is however helpful. It has been addressed in the recent guidelines of the European Association of Echocardiography (EAE), recommending 75 TEE examinations for users having a basic level of experience in TTE and 125 TEE examinations for those without experience in TTE and wanting to receive EAE accreditation to perform TEE independently. Learning from a book or attending a TEE course with little hands-on training will not improve the ability to properly steer the TEE probe in order to visualize all heart structures.

Even after completing training in TEE it can still be challenging to perform TEE in patients with major structural heart abnormalities. There is nowadays a growing number of adult patients with congenital heart defects in whom correction surgery has been conducted in childhood. This group of patients, although small, requires frequent evaluation and professional expertise, while learning possibilities in the form of echocardiographic courses, workshops and books are still very limited. The current guidelines of the European Association of Echocardiography point to the fact that the trainee should not only complete the required number of TTE and TEE examinations during the training, but also to the need for a wellbalanced mix of pathology. The EAE guidelines do not define, however, the number of studies that have to be performed during the training in patients with congenital heart disease. The guidelines of the American College of Cardiology and the American Heart Association advise additional training in a special facility and performing interpretation of a further 75 TEEs in order to acquire proficiency in TEE in complex congenital heart defects. Such training is however time-consuming, and there are only a few centres where TEEs are performed in this group of patients frequently enough to offer such training.

A US Patent Application 20090162820 entitled: "Educational Simulator for Trasesophageal Echocardiography" discloses an educational simulator for transesophageal echocardiography device, which includes a human phantom patterned after a human upper body having a neck, an esophagus, stomach which communicate with each other, and a heart, a dummy probe which is patterned after a genuine ultrasonic probe and of which the tip is embedded with a magnet, a sensor which detects the insertion length and rotation angle of the dummy probe and is placed in the said neck, magnetic sensors which sense the magnetism of the said magnet, a three-dimensional image data archive which stores three-dimensional image data of echocardiography, a CPU which calculates the position, inclination and direction of the dummy probe on the basis of information from each said sensor and clips tomographic image data from the three-dimensional image data on the basis of the calculation, and a display section which shows the clipped tomographic image data as two-dimensional images.

An important limitation of US20090162820 is that in case of the described model the simulation is performed in one or only limited number of different heart models and therefore doesn't allow to train TEE in different disease or to appreciate interpersonal variability, as in real TEE. Moreover, production of such manikins may be expensive and time consuming. Also WO 2009/106784 discloses a transesophageal echocardiography training device.

The aim of the present invention is to alleviate the aforementioned drawbacks of the prior art and to present a method and a system, which will be cost-effective and will give more real-life like learning experience for the trainees.

The object of the invention is a method as described in claim 1.

The scan of the patients tissue may be stored according to a lossless 'Digital Imaging and Communications in Medicine' (DICOM) data format.

The method may involve obtaining a scan of a patients tissue generated by computer tomography with a frequency of at least 10 full multislice scans per second and processing the scans to provide motion simulation.

The method may involve obtaining a scan of a patients tissue generated by ECG-triggered computer tomography and processing the scans to provide static simulation.

The step of processing a graphical data set of the scan into a modified graphical data set of the scan may comprise processing colour values in order to mimic the appearance of tissues typically obtained by transesophageal echocardiography.

The information defining placement of the patient's oesophagus may be stored as a supplementary external to the image such as image properties database.

The virtual, computer implemented user interface may include a simulation of transesophageal echocardiography visual sonographic artifacts.

An educational color layer is added to each image of the data set, wherein the educational color layer visually distinguishes selected tissue structures in order to therefore facilitate the process of learning transesophageal echocardiography.

The computer implemented user interface for navigating a virtual probe may comprise a hardware controller resembling a real-life transesophageal echocardiography probe.

A further object of the invention is a system 8 for transesophageal echocardiography simulation, as described in claim 8.

The system may comprise a hardware controller the controller being adapted to resemble a real-life transesophageal echocardiography probe.

The hardware controller may comprise hardware means for obtaining probe depth, deflection, rotation and plane angulation.

These and other objects of the invention presented herein are accomplished by providing an improved system and method for echocardiography simulations. Further details and features of the invention, its nature and various advantages will become more apparent from the following detailed description of the preferred embodiments shown in a drawing, in which:
Fig. 1 presents a process for obtaining data for the TEE simulation;
Fig. 2 shows conversion of CT images into TEE images;
Fig. 3 shows creation of an educational color layer;
Fig. 4 presents educational color layers;
Fig. 5 shows a computer implemented simulator user interface;
Figs. 6A and 6B depict a hardware controller used to manipulate a virtual TEE probe; and
Fig. 7 presents a diagram of the TEE simulator system according to the present invention.

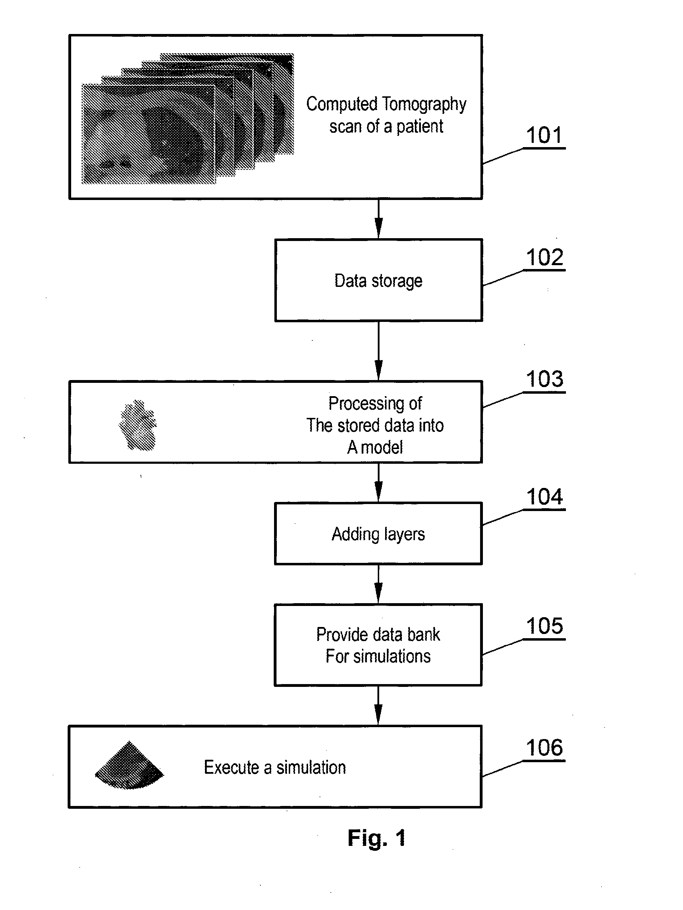

Fig. 1 presents a process for obtaining data for a TEE simulation according to the invention. First the method uses a Computed Tomography (CT) data to construct a 3D model 101 of selected sections of the patient and in particular patient's heart. X-ray CT is a medical imaging method employing tomography created by computer processing. Digital geometry processing is used to generate a three-dimensional image of the inside of an object from a large series of two-dimensional X-ray images taken around a single axis of rotation. Since its introduction in the 1970s, CT has become an important tool in medical imaging, allowing making diagnosis in many pathologies. It has more recently been used for preventive medicine or screening for disease.

At step 102 all scanned data are stored on storage of a computing system, for example a non-volatile storage of a hard disk drive. This computing system may be separate from the CT computer. The CT scan are in one embodiment executed by the TEE simulator while in other embodiments the TEE simulator only received digitally stored CT scans.

Due to high spatial resolution, data from ECG-triggered multislice CT (MSCT) of the heart can be used to build the 3D heart model in the simulator. The CT set consists of a block of images, of a suitable format, stored for example in a lossless 'Digital Imaging and Communications in Medicine' (DICOM) data format. All of these images are situated in parallel planes and the distance between them is encoded within the DICOM format. Each consecutive slide of the CT data set is taken as the next surface for the value Z; values (X, Y) are the pixels of a single image surface.

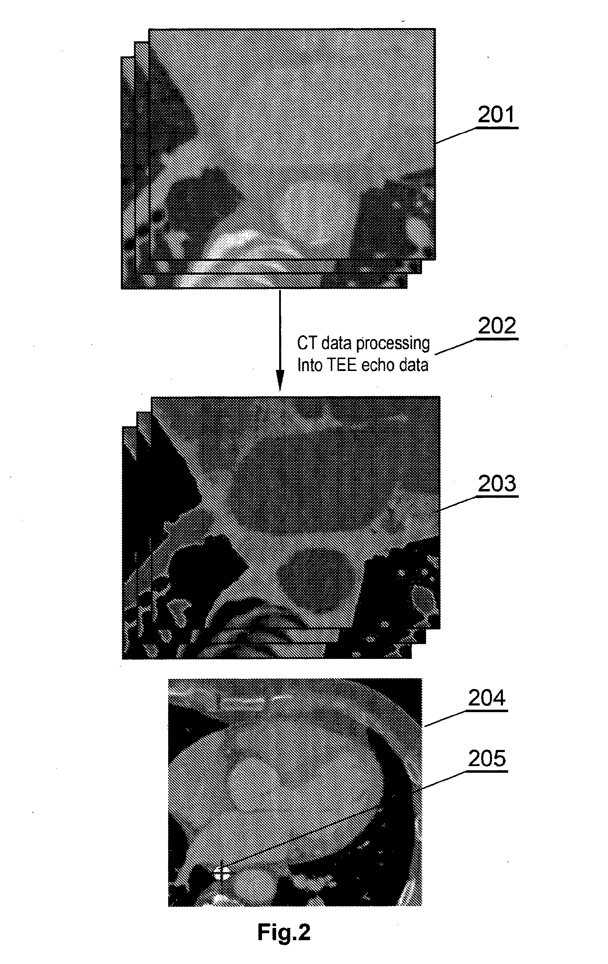

Further at step 103 the stored images must be processed. Before the 3D heart model is created, on every CT image the oesophagus has to be marked and the CT grayscale values converted in order to mimic the appearance of the tissues typically seen in TEE. An example is shown in Fig. 2 where 201 is a data set from CT.

This data set is processed 202 into an output that mimics the tissue colors typically seen in TEE 203. For example, due to contrast usage, some cardiac chambers appear very bright on CT images, whereas in TEE they are almost black. On the other hand, connective tissue in CT is of intermediate brightness while in TEE it appears very bright.

Adjustment of the histogram of CT images, shown in the right picture, makes them similar to TEE images. After that the oesophagus 205 has to be marked on each image 204. The process of marking may be either manual or automatic, the manual method being more time-consuming but resulting in more precise oesophagus marking. This marking may also take a form of information external to the image such as image properties database in order not to interfere with images but have the properties available at hand for further processing.

After such preparations the 3D set created from CT data can be cut in any plane. A trainee can use a user interface for example slider buttons in the simulator interface to freely steer the virtual TEE probe. While setting the desired TEE plane the application additionally conducts calculations in order to simulate typical sonographic artifacts.

Thanks to the above processing virtual examination is simulated for all parameters that define the view in the real TEE examination, such as the probe depth, rotation angle, deflection angle, plane angulation angle or scan depth.

The simulator calculates a projection and simulates TEE visual sonographic artifacts like for example the acoustic shadow. An output is a planar projection simulating two-dimensional TEE view. The present invention addresses major sonographic artifacts, like ultrasound (US) shadowing and US wave refraction.

The simulator realizes ultrasound shadow by a simple function based on ray-casting algorithm. For each point along each radius starting in the esophagus position in current projection the condition of casting is checked. If the point is an obstacle (calcification, air) it is marked white with a dark area behind it. Because the shapes of obstacles are rather oval than long and thin, usually a comet - like shadow is created.

Ultrasound images have a characteristic, concentric noise not seen in CT and being a result of several artifacts occurring on tissue level. To mimic it in real time the present simulator creates a rectangular table with prepared noise and overlaps it on the current view using transformation from Cartesian coordinate system to polar coordinate system. For each projection a seed of random generator is calculated to achieve a look of real TEE images. The value of noise is added to each point of simulation view, according to a level of signal-noise ratio, defined by the operator preparing the CT set.

The simulator according to the present invention can be implemented using software. It enables to create a standalone simulator application and the thin client (in Internet) version as well. The simulator uses a CT data to construct a 3D model of the heart. These data are transformed to levels of brightness equivalent for TEE.

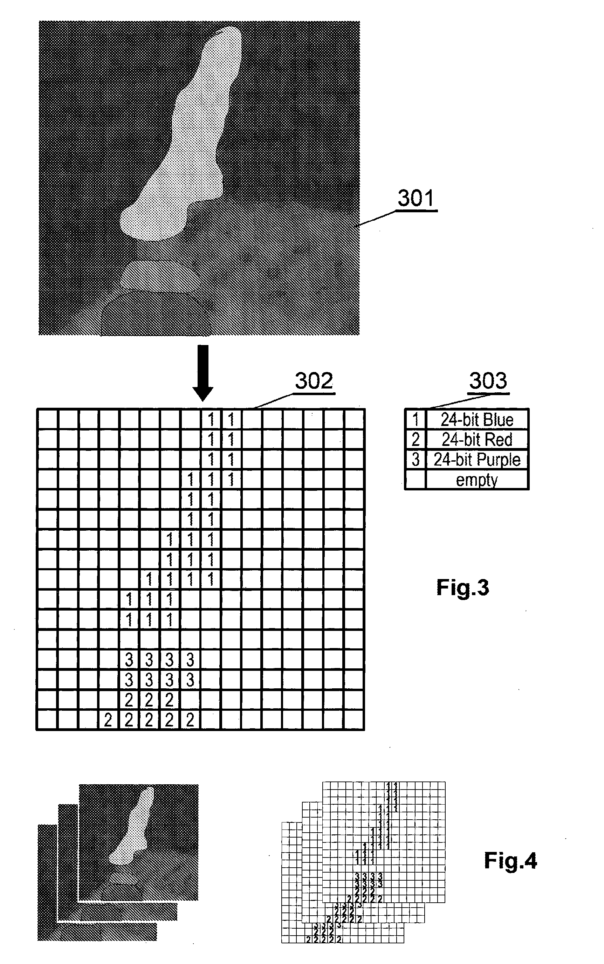

Step 104 of the method optionally adds educational color layer(s). The educational color layer should visually distinguish or point selected tissue or heart structures and therefore facilitate the process of learning TEE. The automated process of heart structure selecting is not available for all cases - the master of educational set should be able to highlight some defects in current input set. Therefore there is a possibility to create a highlighting that is efficient in real-time picture generation. The idea of selecting heart structures is the additional block of data as shown in Fig. 3. The data are the same data as for the simulation but the heart structures are painted by the operator creating the set.

Fig. 3 presents the process of creation of an educational color layer. An image of step 103 is processed in order to identify sections that are of potential interest to trainees. Any abnormalities in tissue may be highlighted to draw attention of the trainees to particular sections of a scan. The amount of highlighting depends on particular needs of the tutor who will oversee the training. Item 301 in Fig. 3 presents an image with highlighted sections in three colors. Subsequently a data record for the educational color layer is created. In this data record each pixel is defined with a number of bits depending on the number of colors used in the layer. In example of 302 educational color layer each pixel will be defined with two bits. Depending on particular needs the number of bits per pixel can be increased. A corresponding color look-up table (CLUT) is created 303. The table maps palette index read from the pixel into some color value, for example 24-bit RGB.

This process needs to be repeated for every image in the model as shown in Fig. 4.

The 3D patient model takes a significant amount of data - approximately 300 MB for a set. This is a large three-dimensional matrix. The cells of matrix are *short int* type (2B) because CT data are up to 16 bits resolution. The data for color information should be stored in additional matrix. A color description takes 3 bytes (red, green, blue). In order to minimize the size of memory occupied this matrix should store the number of indexed colors only (Fig. 3). Using one byte to describe colors limits number of colors to 255. Colors are indexed by means of a CLUT that is a mechanism used to transform a range of input colors into another range of colors. It can be a hardware device built into an imaging system or a software function built into an image processing application. The color look-up table will convert the logical color (pseudo-color) numbers stored in each pixel of video memory into physical colors, normally represented as RGB triplets that can be displayed on a computer monitor.

Loading of color data starts on user demand. First the standard set should be loaded. If the user requests the color layer, a proper directory with color data is checked. The color data images are loaded into memory. During each image processing grayscale points are omitted (value 0 is the default value in color index matrix for grayscale points). Each color point is checked if its color is already indexed. If is, the indexed number is written to color matrix, otherwise a new color is put to color index and this new value is written to color matrix.

The next step of the method is to store patients' data in a data bank. This data bank may optionally include the information from the educational layer.

After that step in step 106 the system is ready to run a simulation. Navigation with a mouse and a keyboard is sufficient to obtain all necessary views, but does not develop the manual skills in handling the real TEE probe.

In order to further enhance the learning experience the simulator according to the present invention includes implementation of methods for picture deformation that result in setting the myocardium and valves in motion thereby facilitating a real-life diagnosis on a beating heart.

Using data acquired by Toshiba Aquilion ONE system using Cardiac functional analysis (CFA) with "one beat" scan protocol the presented software processes up to 16 above described 3D CT data sets acquired within one second. Processing this data in the way described above provides motion simulation in the described TEE simulator. Implementation of speckle tracking algorithms allowing tracking blood kernels and therefore detecting flow is used to simulate Doppler techniques used in TEE (Color Doppler, CW and PW Doppler).

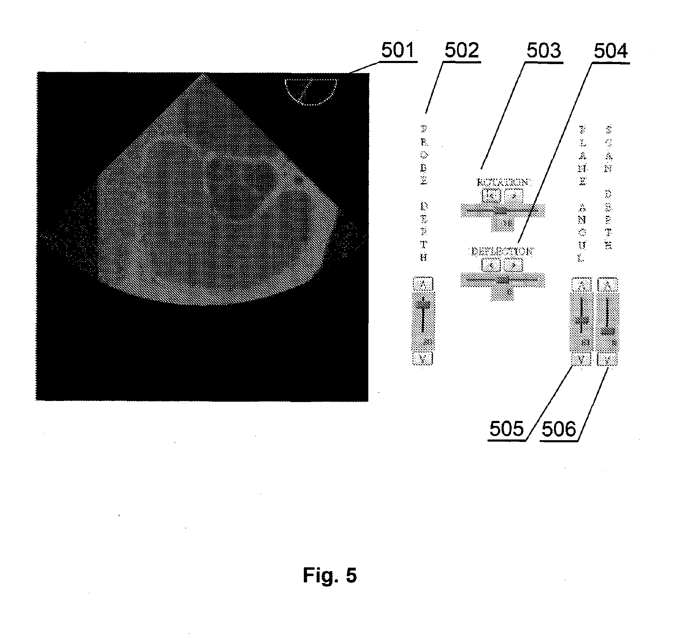

FIG. 5 shows a computer implemented simulator user interface. The simulator has been implemented as a computer program comprising program code means for performing all the steps of the computer-implemented method according to any of preceding drawings and their respective description. The simulator for transesophageal echocardiography comprises a computer readable medium storing computer-executable instructions performing all the steps of the computer-implemented method according to the steps of the computer-implemented method according to any of preceding drawings and their respective description.

The graphical user interface of the simulator for transesophageal echocardiography comprises a main view of the probe 501 and a set of user adjustable parameters of the scan such as probe depth 502, rotation angle 503, deflection angle 504, plane angulation angle 505, and scan depth 506.

The user of the simulator may use typical mouse or keyboard to manipulate the above parameters of the scan. Further, a simple USB-based simulator of the TEE probe will help to make the simulator more realistic.

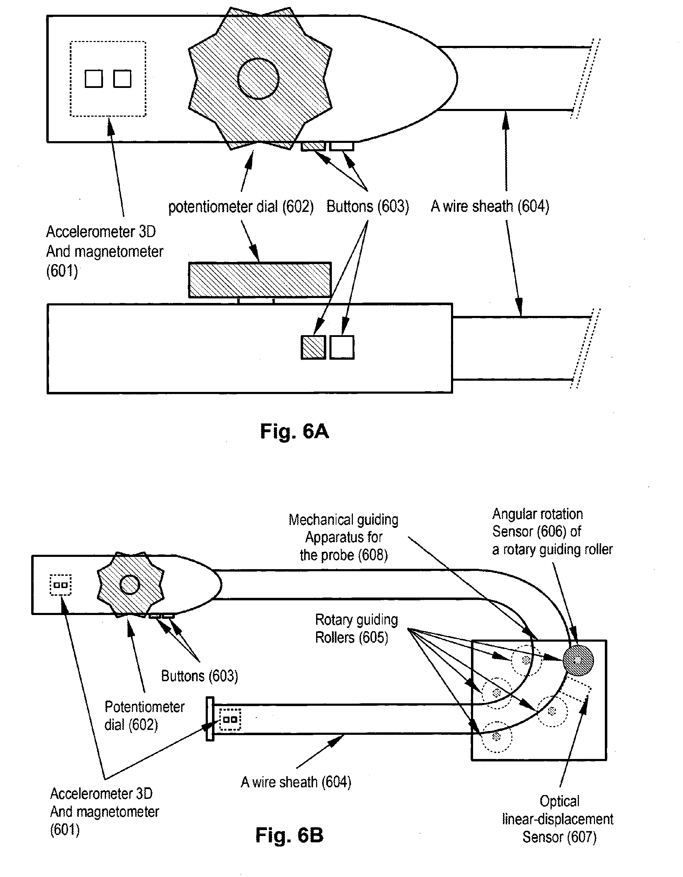

FIG. 6A depicts a controller used to manipulate a virtual TEE probe. Navigation with mouse and keyboard is sufficient to obtain all necessary views; it doesn't however develop the manual skills in handling the real TEE probe. Therefore the present invention presents a real-life TEE probe, which makes the TEE simulation more realistic.

The controller comprises a MEMS accelerometer, a MEMS gyroscope and a magnetometer 601. Further it comprises a set of function buttons 603, a potentiometer dial 602 and a wire sheath resembling that of the real-life TEE probe.

The TEE probe diagnosis parameters are preferably simulated as follows. The probe is guided through a guiding apparatus (608) comprising two or more rotary guiding rollers (605) as shown in Fig. 6B. The rotary guiding rollers (605) may be pushed towards the sheath using appropriate springs in order to require from the TEE trainee to use appropriate force in order to move the probe. Such option improves the training experience and resembles real-life diagnosis.

Probe depth is simulated with a sensor that measures linear displacement (607) providing electrical values as measurement. The linear displacement sensor may be implemented as an ultrasound sensor, infrared sensor, optical sensor or similar. Use of such sensors may require image signal processing methods. Additionally probe depth is simulated with a sensor that measures angular rotation (606) of the selected one or more rotary guiding rollers (605) and providing electrical values as measurement. There may be more than one sensors (606, 607) in order to improve the accuracy of measurement and/or decrease possibility of an error.

In order to simulate deflection a sensor of angular alignment is used. The sensor may be a high-precision continuous rotation potentiometer.

In order to simulate rotation of the probe in patients' oesophagus a sensor that measures linear displacement may be used 607. However in order to detect rotation of the whole TEE probe the simulator may employ one or more MEMS accelerometers. Use of a 3D accelerometer will allow for detection of an angular placement of the TEE probe manipulator. In order to further improve precision of control a gyroscope and or a magnetometer may be employed. Use of such sensors may require implementation of complex signal processing methods.

In order to set plane angulation of the scan plane the controller may employ one or more buttons places on the casing of the TEE probe manipulator.

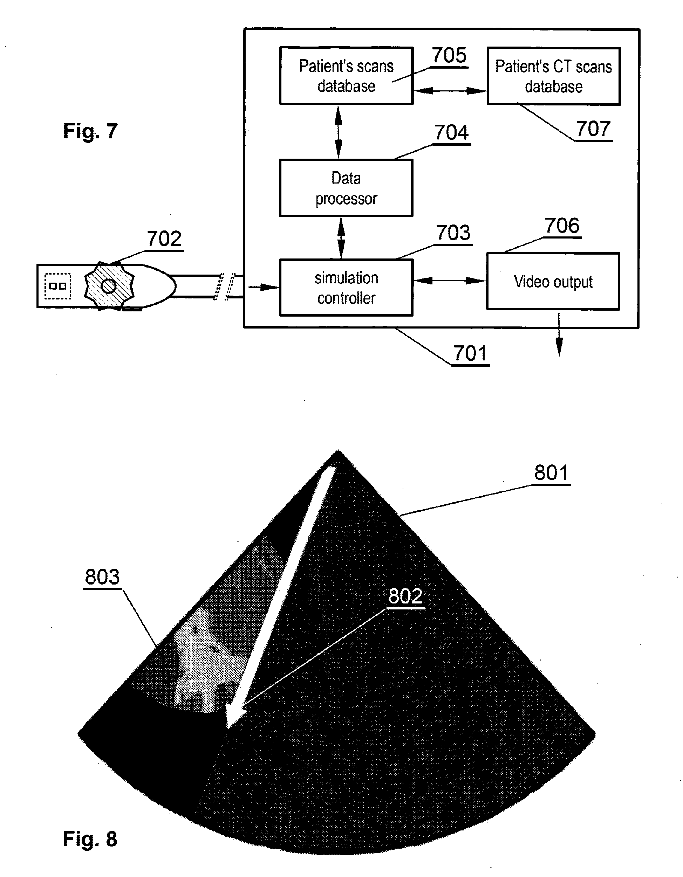

Fig. 7 presents a diagram of the TEE simulator system according to the present invention. The system uses a controller as presented in Fig. 6. The controller 701 may be a typical mouse or keyboard and is used to provide input signals to the system, which are interpreted by the simulation controller 702 as manipulation of the TEE probe in three-dimensional space. The simulation controller 702 further drives a video output 706 of the simulator so a user interface screen may be presented to a user. Additionally the simulation controller 702 bidirectionally exchanges signals with a data processor 704 responsible for data retrieval from a patient's scans database 705. The patient's scans database 705 may be a non-volatile memory such as a hard disk drive and stores data after processing of steps 103, and 104 as shown in Fig. 1. The patient's scans database 705 may further be bidirectionally connected to a computed tomography scans database. The data processor 704 and the simulation controller 702 are responsible for executing steps of the computer implemented method depicted in Fig. 1. The computer instructions may be stored in the patient's scans database 705 or a separate physical memory.

In one embodiment the TEE simulator system 701 may be a remote server receiving instructions from a user's local controller and outputting video data to a user's local display. For example a user may connect to the TEE simulator system via an Internet connection and a www browser client application.

It can be easily recognised, by one skilled in the art, that the aforementioned system and method for controlling method for transesophageal echocardiography simulations may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

The present invention may be implemented using any display, for example on computer monitor, a television display, a mobile phone, PDA, or a laptop computer.

Training with the online, interactive TEE simulator, as presented, with consequent setting of all the standard TEE views can improve practical skills. Because of the use of CT data in the invention, offering high spatial resolution, even trifling heart structures can be visualized. Small objects, such as coronary arteries, or structures not always seen completely in TEE, such as lung veins and pulmonary arteries, can be clearly seen in the simulator according to the present invention. Their evaluation in different views in this simulator can facilitate further assessment in real patients.

It is important for the echocardiographer to have experience in congenital heart defects for two main reasons. The first one is that all echocardiographers are expected to be ready for incidental findings in patients in whom echocardiography is being done for different reasons. It can sometimes have very important implications. For example, an attempt to implant a cardiac stimulator pacing lead through the left subclavian vein in case of a persistent left superior caval vein can lead to unexpected complications. During the training with presented simulator the trainee can face such rare defects and experiment in a risk-free environment with different probe settings, therefore speed up the learning process and thus be ready for the unexpected in the real world.

The second reason is that most patients with congenital heart disease require regular echocardiographic evaluation, mostly with TTE, but sometimes also with TEE. For example, patients with transposition of the great arteries who have undergone Mustard or Senning operation can occasionally require evaluation of the baffles at the atrial level. In case of such complex heart morphology, training with the simulator according to the present invention, prior to the real TEE can be very helpful. Because of frequent use of CT in patients with congenital heart disease a database with a wide spectrum of such cases can be easily created.

The presented simulator is a valuable teaching tool allowing the complex process of learning TEE to be simplified and shortened.

While the invention presented herein has been depicted, described, and has been defined with reference to particular preferred embodiments, such references and examples of implementation in the foregoing specification do not imply any limitation on the invention. It will, however, be evident that various modifications and changes may be made thereto. The presented preferred embodiments are exemplary only. Accordingly, the scope of protection is not limited to the preferred embodiments described in the specification, but is only limited by the claims that follow.

## Claims

1. A method for transesophageal echocardiography simulation, comprising the steps of:
- providing a simulator interface for the transesophageal echocardiography simulation;
- obtaining a scan of a patients tissue;
- providing a virtual, computer implemented user interface for navigating a virtual probe within the graphical data set of the scan; **further comprising the steps of**
- executing the step of obtaining a scan of a patients tissue by using computer tomography;
- processing (103) a graphical data set of the scan into a modified graphical data set of the scan, being a three-dimensional data structure (101), by processing pixels colour values in order to mimic the appearance of tissues typically obtained by transesophageal echocardiography;
- obtaining a further modified graphical data set of the scan wherein each image of the modified graphical data set is provided with information defining placement (103) of the patient's oesophagus (205);
- storing on a computer readable medium a data set defining the further modified graphical data set of the scan;
- wherein the user interface for navigating a virtual probe is adapted to operate on the three-dimensional further modified graphical data set of the scan; and
- wherein an educational color layer is added (104) to each image of the data set, such that the educational color layer visually distinguishes selected tissue structures in order to facilitate the process of learning transesophageal echocardiography whereas any abnormalities in tissue are highlighted with different colors and a data record for the educational color layer is created for each image of the data set whereby in this data record each pixel is defined with a number of bits depending on the number of colors used in the layer and a corresponding color look-up table is created (303), the table mapping palette index to a color value.

2. The method according to claim 1, **characterized in that** the scan of the patients tissue is stored according to a lossless 'Digital Imagine and Communications in Medicine' (DICOM) data format.

3. The method according to claim 1, **characterized by** obtaining a scan of a patients tissue generated by computer tomography with a frequency of at least 10 full multislice scans per second and processing the scans to provide motion simulation.

4. The method according to claim 1, **characterized by** obtaining a scan of a patients tissue generated by ECG-triggered computer tomography and processing the scans to provide static simulation.

5. The method according to claim 1, **characterized in that** the information defining placement of the patient's oesophagus is stored as a supplementary external to the image such as image properties database.

6. The method according to claim 1, **characterized in that** the virtual, computer implemented user interface includes a simulation of transesophageal echocardiography visual sonographic artifacts.

7. The method according to claim 1, **characterized in that** the computer implemented user interface for navigating a virtual probe comprises a hardware controller resembling a real-life transesophageal echocardiography probe.

8. A system for transesophageal echocardiography simulation, comprising:
- a patient's scans database (707);
- a virtual, computer implemented user interface for accepting user commands for navigating a virtual probe within a graphical data set of the patient's scan; the system being **characterized in that** it further comprises
- the patient's database (707) including at least one computed tomography scan of a patient's tissue;
- a visual simulator interface for the transesophageal echocardiography simulation for outputting via a video output (706) a video signal visually defining the simulator interface;
- a data processor (704), bidirectionally coupled to the computed tomography scans database (707) and a patients scans database (705), for processing a graphical data set of the scan into a modified graphical data set of the scan, being a three-dimensional data structure, by processing pixels colour values in order to mimic the appearance of tissues typically obtained by transesophageal echocardiography wherein the modified graphical data set of the scan is stored in the patients scans database (705);
- the data processor (704) being further configured for obtaining a further modified graphical data set of the scan wherein each image of the modified graphical data set is provided with information defining placement of the patient's oesophagus wherein the further modified graphical data set is stored in the patients scans database (705); and
- wherein the user interface is adapted to operate on the three-dimensional further modified graphical data set of the scan; and
- wherein an educational color layer is added, by the data processor (704), to each image of the data set, such that the educational color layer visually distinguishes selected tissue structures in order to facilitate the process of learning transesophageal echocardiography whereas any abnormalities in tissue are highlighted with different colors and a data record for the educational color layer is created for each image of the data set whereby in this data record each pixel is defined with a number of bits depending on the number of colors used in the layer and a corresponding color look-up table (303) is created, the table mapping palette index to a color value.

9. The system according to claim 8, **characterized in that** the system comprises a hardware controller (702) the controller being adapted to resemble a real-life transesophageal echocardiography probe.

10. The system according to claim 8, **characterized in that** hardware controller (702) comprises hardware means for obtaining probe depth, deflection, rotation and plane angulation.

## Patentansprüche

1. Verfahren zur transösophagealen Echokardiographie-Simulation, folgende Schritte umfassend:
- Bereitstellen einer Simulatoroberfläche für die transösophageale Echokardiographie-Simulation;
- Erhalten eines Scans des Gewebes eines Patienten;
- Bereitstellen einer virtuellen, computerimplementierten Benutzeroberfläche zum Navigieren einer virtuellen Sonde innerhalb des grafischen Datensatzes des Scans;
**ferner folgende Schritte umfassend:**
- Ausführen des Schritts des Erhaltens eines Scans des Gewebes eines Patienten mittels Computertomographie;
- Umwandeln (103) eines grafischen Datensatzes des Scans in einen veränderten grafischen Datensatz des Scans, der eine dreidimensionale Datenstruktur ist (101), indem die Farbwerte der Pixel umgewandelt werden, um das Auftreten von Geweben nachzuahmen, die typischerweise mittels transösophagealer Echokardiographie dargestellt werden;
- Erhalten eines weiteren veränderten grafischen Datensatzes des Scans, wobei jedes Bild des veränderten grafischen Datensatzes über Informationen verfügt, die die Lage (103) des Ösophagus (205) des Patienten definieren;
- Speichern eines Datensatzes, der den weiter veränderten grafischen Datensatz des Scans definiert, auf einem computerlesbaren Medium;
- wobei die Benutzeroberfläche zum Navigieren einer virtuellen Sonde so angepasst ist, dass sie auf dem dreidimensionalen weiter veränderten grafischen Datensatz des Scans läuft; und
- wobei jedem Bild des Datensatzes eine aufklärerische Farbschicht hinzugefügt (104) wird, sodass die aufklärerische Farbschicht ausgewählte Gewebestrukturen visuell unterscheidet, um den Prozess des Erlernens der transösophagealen Echokardiographie zu erleichtern, wobei jegliche Gewebeanomalien in unterschiedlichen Farben hervorgehoben werden und für jedes Bild des Datensatzes eine Datenaufzeichnung für die aufklärerische Farbschicht erstellt wird, wobei in dieser Datenaufzeichnung jedes Pixel über eine von der Anzahl der in der Schicht verwendeten Farben abhängigen Bitzahl definiert ist und eine entsprechende Farblegendentabelle erstellt wird (303), wobei die Tabelle den Farbpalettenindex für einen Farbwert abbildet.

2. Verfahren nach Anspruch 1, **dadurch gekennzeichnet, dass** der Scan des Gewebes des Patienten entsprechend einem verlustfreien Datenformat für "Digital Imaging and Communications in Medicine " (DICOM) gespeichert wird.

3. Verfahren nach Anspruch 1, **gekennzeichnet durch** das Erhalten eines mittels Computertomographie generierten Scans des Gewebes eines Patienten mit einer Frequenz von mindestens 10 Mehrschicht-Scans pro Sekunde und das Verarbeiten der Scans zum Bereitstellen der Bewegungssimulation.

4. Verfahren nach Anspruch 1, **gekennzeichnet durch** das Erhalten eines mittels einer EKGgesteuerten Computertomographie generierten Scans des Gewebes eines Patienten und die Verarbeitung der Scans zur Bereitstellung statischer Simulation.

5. Verfahren nach Anspruch 1, **dadurch gekennzeichnet, dass** die Informationen, die die Lage des Ösophagus des Patienten definieren, als zusätzliche, im Bezug auf das Bild externe Informationen gespeichert werden, beispielsweise in einer Datenbank der Bildeigenschaften.

6. Verfahren nach Anspruch 1, **dadurch gekennzeichnet, dass** die virtuelle, computerimplementierte Benutzeroberfläche eine Simulation visueller sonographischer Artefakte der transösophagealen Echokardiographie enthält.

7. Verfahren nach Anspruch 1, **dadurch gekennzeichnet, dass** die computerimplementierte Benutzeroberfläche für das Navigieren einer virtuellen Sonde einen Hardware-Controller umfasst, der einer lebensechten transösophagealen Echokardiographie-Sonde ähnelt.

8. System für eine transösophagealen Echokardiographie-Simulation, umfassend:
- eine Datenbank der Patientenscans (707);
- eine virtuelle, computerimplementierte Benutzeroberfläche für das Annehmen von Benutzerbefehlen für das Navigieren einer virtuellen Sonde innerhalb eines grafischen Datensatzes des Scans des Patienten; wobei das System **dadurch gekennzeichnet ist, dass** es ferner umfasst:
- die Datenbank des Patienten (707), die mindestens einen Computertomographie-Scan eines Gewebes des Patienten enthält;
- eine visuelle Simulatoroberfläche für die transösophageale Echokardiographie-Simulation für die Ausgabe eines visuell die Simulatoroberfläche definierenden Videosignals per Video-Ausgabe (706);
- einen Datenprozessor (704), der bidirektional mit der Datenbank der Computertomographie-Scans (707) und einer Datenbank der Patientenscans (705) verbunden ist, um einen grafischen Datensatz des Scans in einen veränderten grafischen Datensatz des Scans umzuwandeln, der eine dreidimensionale Datenstruktur ist, indem die Farbwerte der Pixel umgewandelt werden, um das Auftreten von Geweben nachzuahmen, die typischerweise mittels transösophagealer Echokardiographie dargestellt werden, wobei der veränderte grafische Datensatz des Scans in der Datenbank der Patientenscans (705) gespeichert wird;
- wobei der Datenprozessor (704) ferner so konfiguriert ist, dass er einen weiteren veränderten grafischen Datensatz des Scans erhält, wobei jedes Bild des veränderten grafischen Datensatzes über Informationen verfügt, die die Lage des Ösophagus des Patienten definieren, wobei der weiter veränderte grafische Datensatz in der Datenbank der Patientenscans (705) gespeichert wird; und
- wobei die Benutzeroberfläche so angepasst ist, dass sie auf dem dreidimensionalen weiter veränderten Datensatz des Scans läuft; und
- wobei jedem Bild des Datensatzes von dem Datenprozessor (704) eine aufklärerische Farbschicht hinzugefügt wird, sodass die aufklärerische Farbschicht ausgewählte Gewebestrukturen visuell unterscheidet, um den Prozess des Erlernens der transösophagealen Echokardiographie zu erleichtern, wobei jegliche Gewebeanomalien in unterschiedlichen Farben hervorgehoben werden und für jedes Bild des Datensatzes eine Datenaufzeichnung für die aufklärerische Farbschicht erstellt wird, wobei in dieser Datenaufzeichnung jedes Pixel mit einer von der Anzahl der in der Schicht verwendeten Farben abhängigen Bitzahl definiert ist und eine entsprechende Farblegendentabelle (303) erstellt wird, wobei die Tabelle den Farbpalettenindex für einen Farbwert abbildet.

9. System nach Anspruch 8, **dadurch gekennzeichnet, dass** das System einen Hardware-Controller (702) umfasst, wobei der Controller so angepasst ist, dass er einer lebensechten transösophagealen Echokardiographie-Sonde ähnelt.

10. System nach Anspruch 8, **dadurch gekennzeichnet, dass** der Hardware-Controller (702) Hardware-Mittel umfasst, um die Tiefe, die Deflektion, die Rotation und die Ebenenangulation der Sonde darzustellen.

## Revendications

1. Procédé de simulation d'échocardiographie transoesophagienne, comprenant les étapes consistant à :
- fournir une interface de simulateur pour la simulation d'échocardiographie transoesophagienne ;
- obtenir un balayage d'un tissu de patient ;
- fournir une interface utilisateur virtuelle mise en oeuvre par ordinateur permettant de faire naviguer une sonde virtuelle au sein d'une série de données graphiques du balayage ;
**comprenant en outre les étapes consistant à**
- exécuter l'étape consistant à obtenir un balayage d'un tissu de patient en utilisant la tomographie assistée par ordinateur ;
- transformer (103) une série de données graphiques du balayage en une série de données graphiques modifiées du balayage, qui est une structure de données tridimensionnelle (101), en traitant des valeurs de couleurs de pixels afin d'imiter l'aspect de tissus généralement obtenu par échocardiographie transoesophagienne ;
- obtenir une série de données graphiques davantage modifiées du balayage dans lequel chaque image de la série de données graphiques modifiées est fournie avec des informations définissant l'emplacement (103) de l'oesophage du patient (205) ;
- stocker sur un support lisible par ordinateur une série de données définissant la série de données graphiques davantage modifiées du balayage ;
- ladite interface utilisateur permettant de faire naviguer une sonde virtuelle étant adaptée pour agir sur la série de données graphiques davantage modifiées tridimensionnelles du balayage ; et
- une couche de couleur éducative étant ajoutée (104) à chaque image de la série de données, de sorte que la couche de couleur éducative distingue des structures de tissus sélectionnées afin de faciliter le processus d'apprentissage d'échocardiographie transoesophagienne alors que toutes les anomalies dans un tissu sont mises en évidence par des couleurs différentes et un registre de données pour la couche de couleur éducative étant créé pour chaque image de la série de données au moyen de quoi dans ce registre de données chaque pixel est défini par un nombre de bits selon le nombre de couleurs utilisé dans la couche et une table de consultation de couleurs correspondante étant créée (303), la table faisant correspondre un indice de palette à une valeur de couleur.

2. Procédé selon la revendication 1, **caractérisé en ce que** le balayage du tissu de patient est stocké selon un format de données DICOM (Digital Imaging and Communications in Medicine) sans perte.

3. Procédé selon la revendication 1, **caractérisé par** l'obtention d'un balayage d'un tissu de patient généré par tomographie assistée par ordinateur avec une fréquence d'au moins 10 balayages multi-tranches complets par seconde et le traitement des balayages pour donner une simulation de mouvement.

4. Procédé selon la revendication 1, **caractérisé par** l'obtention d'un balayage de tissu de patient généré par tomographie assistée par ordinateur déclenchée par ECG et le traitement des balayages pour donner une simulation statique.

5. Procédé selon la revendication 1, **caractérisé en ce que** les informations définissant l'emplacement de l'oesophage du patient sont stockées en tant que complément externe à l'image telle qu'une base de données de propriétés d'images.

6. Procédé selon la revendication 1, **caractérisé en ce que** l'interface utilisateur virtuelle mise en oeuvre par ordinateur inclut une simulation d'artefacts échographiques visuels d'échocardiographie transoesophagienne.

7. Procédé selon la revendication 1, **caractérisé en ce que** l'interface utilisateur mise en oeuvre par ordinateur permettant de faire naviguer une sonde virtuelle comprend un contrôleur matériel ressemblant à une sonde d'échocardiographie transoesophagienne réelle.

8. Système de simulation d'échocardiographie transoesophagienne, comprenant :
- une base de données de balayages (707) d'un patient ;
- une interface utilisateur virtuelle mise en oeuvre par ordinateur destinée à accepter des commandes d'utilisateurs pour faire naviguer une sonde virtuelle au sein d'une série de données graphiques du balayage d'un patient ;
le système étant **caractérisé en ce qu'**il comprend en outre
- la base de données (707) du patient comportant au moins un balayage de tomographie assistée par ordinateur d'un tissu de patient ;
- une interface de simulateur visuelle destinée à la simulation d'échocardiographie transoesophagienne pour émettre par l'intermédiaire d'une sortie vidéo (706) un signal vidéo définissant visuellement l'interface de simulateur ;
- un processeur de données (704) couplé de façon bidirectionnelle à la base de données de balayages de tomographie assistée par ordinateur (707) et à une base de données de balayages de patients (705), destiné à transformer une série de données graphiques du balayage en une série de données graphiques modifiées du balayage, qui est une structure de données tridimensionnelle, en traitant des valeurs de couleurs de pixels afin d'imiter l'aspect de tissus généralement obtenu par échocardiographie transoesophagienne, ladite série de données graphiques modifiées du balayage étant stockée dans la base de données de balayages de patients (705) ;
- le processeur de données (704) étant en outre configuré pour obtenir une série de données graphiques davantage modifiées du balayage dans lequel chaque image de la série de données graphiques modifiées est fournie avec des informations définissant l'emplacement de l'oesophage du patient, ladite série de données graphiques davantage modifiées étant stockée dans la base de données de balayages de patients (705) ; et
- ladite interface utilisateur étant adaptée pour agir sur la série de données graphiques tridimensionnelles davantage modifiées du balayage ; et
- une couche de couleur éducative étant ajoutée, par le processeur de données (704), à chaque image de la série de données, de sorte que la couche de couleur éducative distingue visuellement des structures de tissus sélectionnées afin de faciliter le processus d'apprentissage d'échocardiographie transoesophagienne alors que toutes les anomalies dans un tissu sont mises en évidence par des couleurs différentes et un registre de données pour la couche de couleur éducative étant créé pour chaque image de la série de données au moyen de quoi dans ce registre de données chaque pixel est défini par un nombre de bits selon le nombre de couleurs utilisé dans la couche et une table de consultation de couleurs (303) correspondante étant créée, la table faisant correspondre un indice de palette à une valeur de couleur.

9. Système selon la revendication 8, **caractérisé en ce que** le système comprend un contrôleur matériel (702), le contrôleur étant adapté pour ressembler à une sonde d'échocardiographie transoesophagienne réelle.

10. Système selon la revendication 8 **caractérisé en ce que** le contrôleur matériel (702) comprend des moyens matériel pour obtenir la profondeur, la déflexion, la rotation et l'angulation plane de la sonde.
